# EUROPÄISCHE PATENTSCHRIFT

(11) **EP 2 396 623 B1**
(45) Veröffentlichungstag und Bekanntmachung des Hinweises auf die Patenterteilung: **01.04.2015**
(21) Anmeldenummer: 10703082.7
(22) Anmeldetag: 10.02.2010
(51) Int. Cl.: G01S 17/89, G01S 7/481, G01C 1/04, G01C 15/00, G01S 17/42, G01S 7/51, G01C 3/04, G02B 23/00

(54) **GEODÄTISCHES VERMESSUNGSGERÄT**
Geodesic measuring device
Appareil de mesure géodésique

(30) Priorität: 11.02.2009 EP 09152540
(43) Veröffentlichungstag der Anmeldung: 21.12.2011
(73) Patentinhaber: Leica Geosystems AG, 9435 Heerbrugg (CH)
(72) Erfinder: JENSEN, Thomas, CH-9400 Rorschach (CH)
(74) Vertreter: Kaminski Harmann
(86) Internationale Anmeldenummer: PCT/EP2010/051658
(87) Internationale Veröffentlichungsnummer: WO 2010/092087

(56) Entgegenhaltungen:
- EP-A- 1 081 459
- EP-A- 1 744 195
- EP-A- 1 744 196
- EP-A1- 1 610 092
- WO-A-2007/107975
- DE-A1- 10 235 888
- DE-A1-102005 005 803

## Beschreibung

Die Erfindung betrifft ein geodätisches Vermessungsgerät mit einer Winkel- und Entfernungsmessfunktionalität zur Bestimmung einer Position eines Zielobjekts nach dem Oberbegriff des Anspruchs 1.

Zum Vermessen eines Zielpunktes sind seit der Antike zahlreiche geodätische Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Ausbaustufe der Totalstation können zudem eine Motorisierung der Anziel- bzw. Visiereinrichtung sowie Mittel zur automatischen Zielsuche und -verfolgung integriert sein. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Aus dem Stand der Technik bekannte Totalstationen können weiters über eine Funkdatenschnittstelle verfügen zum Aufbau einer Funkverbindung zu externen Peripheriekomponenten wie z.B. zu einem handhaltbaren Datenerfassungsgerät, welches insbesondere als Datenlogger oder Feldrechner ausgebildet sein kann.

Zum Anvisieren bzw. Anzielen des zu vermessenden Zielpunkts weisen gattungsgemässe geodätische Vermessungsgeräte ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers - dargestellt werden kann. Die Optik der Visiereinrichtung kann dabei einen manuellen Fokus - beispielsweise eine Stellschraube zur Veränderung der Position einer Fokussieroptik-aufweisen oder über einen Autofokus verfügen, wobei das Verändern der Fokusposition z.B. durch Servomotoren erfolgt. Automatische Fokussiereinrichtungen für Zielfernrohre geodätischer Geräte sind z.B. aus der DE 19710722, der DE 19926706 oder der DE 19949580 bekannt.

Das optische System bzw. der optische Sichtkanal der Visiereinrichtung enthält meist eine Objektivlinsengruppe, ein Bildumkehrsystem, eine Fokussieroptik, eine Strichplatte zur Erzeugung eines Fadenkreuzes und ein Okular, die z.B. in dieser Reihenfolge von der Objektseite her angeordnet sind. Die Position der Fokussierlinsengruppe wird abhängig von der Objektentfernung so eingestellt, dass ein scharfes Objektbild auf der in der Scharfstellebene angeordneten Strichplatte entsteht. Dieses kann dann durch das Okular betrachtet oder z.B. anhand einer koaxial angeordneten Kamera erfasst werden.

Beispielhaft ist der Aufbau gattungsgemässer Zielfernrohre von geodätischen Geräten in den Veröffentlichungsschriften EP 1 081 459 oder EP 1 662 278 gezeigt.

Aufgrund des meist sowohl als Sichtkanal als auch für Messungen gemeinsam zu nutzenden Strahlengangs erfordern solche Geräte dessen technische Auslegung in der Bauweise eines Teleskops mit spezialisierten, hochpräzisen und aufwändig herzustellenden Optiken. Des Weiteren sind für die koaxiale elektronische Distanzmessung ein zusätzlicher separater Sende- und Empfangskanal sowie eine zusätzliche Bildebene für die Wellenlänge des Distanzmessers vorgesehen. Zudem weisen gängige Vermessungsgeräte inzwischen eine automatische Zielverfolgungs-Funktion (ATR: "Automatic Target Recognition") auf, für die eine weitere separate ATR-Lichtquelle - z.B. ein Multimodefaserausgang, der Licht mit einer Wellenlänge von 850 nm emittiert-sowie ein spezieller ATR-Kamerasensor zusätzlich im Teleskop integriert sind, sodass die Teleskop-Optik eine hohe Komplexität mit einigen verästelten Strahlengängen aufweist.

Um Verzeichnungen, Farbstiche oder eine Vignettierung-d.h. einen Helligkeitsabfall in Randbereichen des beobachtbaren Sichtfelds - zu vermeiden, sind enorm hohe Anforderungen an die einzelnen optischen Komponenten gegeben. Demnach sind speziell und aufwändig beschichtete Optiken zur Aus- und Einkopplung einzelner Wellenlängen erforderlich, wobei trotz Beschichtung das visuelle Band eine möglichst farbgetreue Darstellung erlauben soll. Zudem bedingt die hohe Komplexität des Teleskops einen hohen Aufwand für die erforderliche hochpräzise Montage und Justage der optischen Komponenten.

Zusammengefasst sind durch die gemeinsame Nutzung der optischen Komponenten des Teleskops sowohl für den direkten Sichtkanal als auch für Messungen die Anforderungen an die optischen Komponenten sehr hoch, was - nachteilig - einen hohen Aufwand bei der Herstellung, Montage und Justage der optischen Komponenten erfordert.

Um die Gefahr eines Parallaxenfehlers zwischen dem Durchsicht-Bild und der das Fadenkreuz erzeugenden Strichplatte bei schrägem Blick in das Okular gering zu halten, ist bei gattungsgemässen Zielfernrohren die Öffnung der Austrittspupille des Okulars sehr klein. Beispielsweise weist die Öffnung der Pupille einen Durchmesser von nur wenigen Millimetern auf. Auch dies erweist sich als Nachteil, da das Betrachten des Zieles durch die kleine Pupillenöffnung benutzerseitig als anstrengend empfunden wird und insbesondere für brillentragende Benutzer suboptimal ist. So wird das Sichtfeld für den Betrachter bereits bei einem geringfügig vom Okular beabstandeten Blick in das Okular deutlich eingeschränkt.

Um dem Benutzer ein entspannteres Betrachten des zu vermessenden Ziels und eine ergonomisch günstige Anwendung des Vermessungsgeräts zu erlauben, werden inzwischen häufig Kamera-Bildschirm-Kombinationen verwendet. Dazu ist im Zielteleskop beispielsweise zusätzlich eine koaxiale Kamera vorgesehen.

Das Kamera-Bild kann auf dem Benutzerdisplay der Anzeige-Steuereinheit oder auf dem Display eines separaten Peripheriegerätes (z.B. Datenlogger) dargestellt werden, sodass eine Steuerung des Messvorgangs sowie eine Zielidentifikation bzw. Zielverfolgung und somit eine Erleichterung und Automatisierung des Vermessungsvorgangs bewirkt werden kann.

Das Anvisieren des Zielobjekts erfolgt benutzerseitig allerdings meist weiterhin mittels Betrachten des Ziels durch das Okular des Zielfernrohrs, da im praktischen Einsatz - z.B. bei Sonneneinstrahlung - das angezeigte Display-Bild der Anzeige-Steuereinheit bzw. des Datenloggers ungenügend erkennbar sein kann.

Zudem erfordert die zusätzlich zum Direktsichtkanal vorhandene Kamera eine weitere in der Teleskopoptik vorgesehene Bildebene für die Kamera und eine Auskopplung eines Teillichtstrahls über einen Strahlteiler, was die Komplexität des Zielfernrohrs weiter erhöht und die Helligkeit des Direktsichtkanal-Bilds verringert.

Die Veröffentlichungsschrift DE102005005803 offenbart ein digitales Okularmodul für ein optisches Beobachtungsinstrument mit einem digitalen Bildsensor zur Erfassung von Bildern in einer Zwischenbildebene des optischen Beobachtungsinstruments.

Die Veröffentlichungsschrift JP2004163197 offenbart ein geodätisches Vermessungsgerät entsprechend dem Oberbegriff des Anspruchs 1.

Eine Aufgabe der Erfindung ist das Bereitstellen eines verbesserten geodätischen Vermessungsgeräts zur Bestimmung der Position eines zu vermessenden Zielpunkts. Insbesondere soll dabei ein - für den Benutzer - komfortableres Anvisieren des Zielpunkts ermöglicht werden, im Speziellen wobei auch bei einem Feldeinsatz bei Sonnenschein der Zielpunkt ergonomisch bequem - und auch für Brillenträger geeignet - anvisiert werden kann.

Eine weitere Aufgabe ist eine Reduktion der Komplexität der Teleskopoptik sowie das Ermöglichen einer Verwendung von weniger aufwändig herstellbaren optischen Elementen und einer weniger aufwändigen Montage/Justage der optischen Komponenten, ohne dabei Einbussen hinsichtlich der Qualität des durch das Okular der Visiereinrichtung betrachtbaren Umgebungs-Bildes hinnehmen zu müssen.

Eine weitere Aufgabe der Erfindung ist das Ermöglichen der Verwendung eines Okulars mit einer verhältnismässig grossen Pupillenöffnung, ohne dass dabei jedoch die Gefahr eines Parallaxenfehlers zwischen Umgebungs-Bild und Fadenkreuz bei schrägem Blick in das Okular besteht.

Diese Aufgaben werden durch die Verwirklichung der kennzeichnenden Merkmale des unabhängigen Anspruchs 1 gelöst. Merkmale, die die Erfindung in alternativer oder vorteilhafter Weise weiterbilden, sind den abhängigen Patentansprüchen zu entnehmen.

Die Erfindung betrifft ein geodätisches Vermessungsgerät, ausgebildet als Theodolit oder Totalstation, mit einer Winkel- und Entfernungsmessfunktionalität zur Bestimmung einer Position eines Zielobjekts. Dafür weist das Vermessungsgerät eine als Zielfernrohr fungierende Visiereinrichtung auf, mit einem vielfach vergrössernd wirkenden Objektiv, einem Kamerasensor zur Erfassung eines Kamera-Bildes eines Sichtfeld, einer dem Kamerasensor vorgeordneten Fokussieroptik sowie einem Okular. Zwischen dem Objektiv und dem Kamerasensor ist dabei ein erster optischer Pfad definiert.

Des Weiteren ist ein mit dem Kamerasensor verbundener elektronischen Grafikprozessor zur Generierung eines Anzeigebilds aus dem erfassten Kamera-Bild vorhanden.

Erfindungsgemass weist die Visiereinrichtung dabei zusätzlich eine dem Okular vorgeordnete elektronische graphische Anzeigekomponente - insbesondere ein Mikro- oder Minidisplay - zur visuellen Darstellung des generierten Anzeigebilds auf. Zwischen der Anzeigekomponente und dem Okular ist dabei ein - vom ersten optischen Pfad getrennter - zweiter optischer Pfad definiert. Zur Trennung der optischen Pfade ist in der Visiereinrichtung insbesondere eine für optische Strahlen im sichtbaren Bereich undurchlässige Abgrenzung zwischen dem ersten und dem zweiten optischen Pfad derart vorgesehen, dass durch das Objektiv einfallende optische Strahlen am Eintritt in das Okular gehindert werden.

Die Erfindung löst sich somit von geodätischen Vermessungsgeräten des Standes der Technik, indem auf einen - aufwändig herzustellende Optiken mit hohen Anforderungen notwendig machenden - visuellen Direktsichtkanal in der Visiereinrichtung vollständig verzichtet wird.

Um dabei allerdings dennoch ein Anvisieren des Zielobjekts bei Sonnenschein - nämlich im Falle, dass die Anzeige eines externen Displays nicht genügend gut erkennbar ist - zu ermöglichen, ist beim erfindungsgemässen Vermessungsgerät in der als Zielfernrohr fungierenden Visiereinrichtung die elektronische graphische Anzeigekomponente vorgesehen, die durch das Okular betrachtet werden kann und somit den visuellen Direktsichtkanal ersetzt.

Wie bereits bei geodätischen Vermessungsgeräten des Standes der Technik bekannt, ist die Visiereinrichtung zielfernrohrartig mit einem Objektiv als Teil der Zielteleskopoptik ausgestattet, jedoch ohne Direktsichtkanal.

Entsprechend der vorliegenden Erfindung wird das anhand des Kamerasensors erfasste Kamera-Bild insbesondere als Live-Anzeigebild auf dem Mikrodisplay bereitgestellt - wobei der elektronische Grafikprozessor vorzugsweise in Echtzeit-Verarbeitung das Live-Anzeigebild aus den Kamera-Bilddaten generiert.

Dafür werden die Anzeigebilddaten vom Grafikprozessor an das damit verbundene Mikrodisplay gesendet und dort visuell als Anzeigebild - insbesondere Live-Anzeigebild - dargestellt. Das Anzeigebild kann nun von einem Benutzer durch das - dem Mikrodisplay nachgeordnete - Okular betrachtet werden.

Als erfindungsgemässer technischer Effekt kann durch den Wegfall des visuellen Direktsichtkanals die Komplexität des optischen Systems des Zielteleskops deutlich verringert werden, unter anderem da keine separaten Kamera- bzw. Direktsicht-Bildebenen notwendig und kein separater Kamera-Zweig mit Auskopplung eines Teilstrahls anhand eines Strahlteilers erforderlich sind.

Ausserdem wird durch ein elektronisches Bearbeiten des Kamera-Bilds eine Verwendung von weniger aufwändig hergestellten und geringeren Anforderungen gerecht werdenden Optiken ermöglicht, ohne dass dabei die Qualität des durch das Okular betrachtbaren Anzeigebilds gegenüber einem Direktsichtbild wesentlich verringert wird. Im Gegenteil kann erfindungsgemäss durch geeignete elektronische Bearbeitung des erfassten Kamera-Bilds ein hinsichtlich vieler Aspekte gegenüber einem Direktsichtbild gar verbessertes Anzeigebild trotz Verwendung von qualitativ geringwertigerer Optiken bereitgestellt und durch das Okular auf dem Mikrodisplay betrachtet werden. Erfindungsgemäß kann eine Verzeichnung, und optional ein durch Beschichtung der Optiken verursachter Farbstich und/oder eine Vignettierung, anhand entsprechender, an sich bekannter softwareseitiger Bildbearbeitungsmassnahmen - insbesondere in Echtzeit - reduziert, kompensiert oder gar gänzlich korrigiert werden.

Gleiches gilt für die Präzision bei der Montage und Justage der Teleskopoptiken. So können gemäss der Erfindung geringfügige Fehler des im Okular betrachtbaren Umgebungsbilds, die etwa durch in der Teleskopoptik unpräzise positionierte optische Elemente verursacht werden, anhand entsprechender elektronischer Bearbeitung des erfassten Kamera-Bilds korrigiert bzw. kompensiert werden. Dies erlaubt das Montieren/Justieren der Teleskopoptiken mit geringerem Aufwand bzw. unter Einhaltung geringerer Anforderungen, ohne dabei die Qualität des betrachtbaren Anzeigebilds wesentlich negativ zu beeinträchtigen.

Zudem kann gemäss der Erfindung.auf die bei Zielteleskopen mit Direktsichtkanal erforderliche Bildumkehroptik, z.B. Bildumkehrprisma, sowie auf eine Strichplatte zur Erzeugung des Fadenkreuzes durch entsprechende elektronische Bearbeitung des erfassten Kamera-Bilds verzichtet werden, sodass hierdurch die Komplexität der Visiereinrichtung weiters verringert werden kann. Beispielsweise kann ein Fadenkreuz - optional zusammen mit weiteren die Messung betreffenden Informationen - elektronisch direkt in das Anzeigebild eingefügt werden.

Durch ein solches elektronisches Hinzufügen eines Fadenkreuzes beim Generieren des Anzeigebilds im Grafikprozessor ergibt sich dabei zudem der weitere Vorteil gegenüber Zielfernrohren mit Direktsichtkanal, dass ein Okular mit einem verhältnismässig grossem Pupillenöffnungsdurchmesser verwendet werden kann. Wie bereits beschrieben ist hingegen bei einem visuellen Direktsichtkanal mit Strichplatte die Öffnung der Austrittspupille des Okulars sehr klein zu wählen, z.B. mit einen Durchmesser von nur wenigen Millimetern, insbesondere unter etwa 5 mm, um einen Parallaxenfehler zwischen Strichplatte und Zwischenbild bei schrägem Blick in das Okular gering zu halten. Dieses Problem ist bedingt durch die Überlagerung einer virtuellen Bildebene, nämlich der Zwischenbild-Ebene des Umgebungsbildes, mit einer realen Bildebene, nämlich der Strichplatte.

Hingegen lässt die Erfindung - ohne Gefährdung eines solchen Parallaxenfehlers - die Verwendung eines Okulars mit einer verhältnismässig grossen Pupillenöffnung zu, da ein Bild des Sichtfeldbereichs zusammen mit dem Fadenkreuz gemeinsam in einer Ebene, nämlich insbesondere der Ebene des Bildschirms des Mikrodisplays, erzeugt wird. Beispielsweise kann das Okular demnach eine Pupillenöffnung mit einem Durchmesser zwischen 5 und 20 mm aufweisen. Dadurch ergibt sich der Vorteil, dass keine störend wirkende kleine Austrittspupille im Okular notwendig ist und benutzerseitig das Anvisieren des Zielobjekts durch das Okular mit höherem Komfort und entspannter erfolgen kann. Zudem ist dadurch das Betrachten des Anzeigebilds durch das Okular auch für brillentragende Benutzer verbessert geeignet.

Des Weiteren ermöglicht das elektronische Einfügen des Fadenkreuzes ein Bereitstellen von einer Auswählbarkeit aus möglichen vorgegebenen Fadenkreuzausführungen, insbesondere derart, dass die Wahl einer Fadenkreuzausführung anwendungsspezifisch erfolgen kann. Beispielsweise kann eine Auswahl aus hinsichtlich der Farbe und/oder Form unterschiedlichen Fadenkreuzen dem Benutzer zur Verfügung gestellt werden. Für einige Anwendungen können sich beispielsweise konzentrische Kreise oder ein Gitter zur Indizierung des anvisierten Zielpunkts im Anzeigebild als vorteilig erweisen. Um auch bei dunklen Lichtverhältnissen, z.B. bei Abenddämmerung, das Fadenkreuz im Anzeigebild deutlich zu erkennen, kann das Fadenkreuz beispielsweise in weisser Farbe gewählt werden.

Hinsichtlich des Aufwands bei der Montage und Justage der Visiereinrichtung ergeben sich ausserdem dadurch Vorteile, dass eine - verglichen mit der erforderlichen Positioniergenauigkeit einer Strichplatte bei Zielfernrohren des Standes der Technik - erheblich geringere laterale Positioniergenauigkeit des Kamerasensors relativ zur optischen Achse der Visiereinrichtung genügt. Da nämlich der mit der optischen Achse korrespondierende Bilderfassungspunkt des Kamerasensors durch eine einfache Kalibrierung bestimmbar ist, kann das Fadenkreuz mit seinem Zentrum exakt an der mit diesem Bilderfassungspunkt verknüpften Position im Anzeigebild softwareseitig eingefügt und somit das Zielobjekt hochpräzise anvisieret werden.

Das für Direktsichtkanäle erforderliche hochpräzise und daher aufwändige Positionieren der Strichplatte kann dabei erfindungsgemäss gänzlich wegfallen.

Auch die Einbauposition des Mikrodisplays als graphische Anzeigekomponente ist hinsichtlich der bereitgestellten Anvisiergenauigkeit unkritisch und prinzipiell von der optischen Achse der Visiereinrichtung bzw. des Objektivs unabhängig. Um ein intuitives Anvisieren zu ermöglichen bzw. das Anvisieren zu erleichtern, können vorzugsweise jedoch die optischen Achsen des Objektivs und des Okulars - sowie insbesondere des Mikrodisplays - koaxial ausgerichtet sein.

Ein weiterer Vorteil kann erfindungsgemäss hinsichtlich des Verfahrens des - dem Kamerasensor vorgeordneten - Fokussierelements bewirkt werden, wobei das Verfahren auf bekannte Weise manuell oder automatisch erfolgen kann. Weist nämlich die Mechanik beim Verfahren des Fokussierelements sich reproduzierende Ablauffehler auf, die beispielsweise zu einer seitlichen Verschiebung der Bildlage auf dem Kamerasensor führen, kann dies softwareseitig beim Erzeugen des Anzeigebilds aus dem erfassten Kamera-Bild durch den Grafikprozessor in Abhängigkeit von der jeweils aktuellen Fokusstellung korrigiert werden.

Trotz eines eigentlich erheblichen absoluten Fehlers in der Mechanik - wie beispielsweise eine Biegung in der Fokussieroptikführung - kann somit erfindungsgemäss ein hochpräzises Anvisieren durch softwareseitige Kompensation des Fehlers im Anzeigebild gewährleistet werden.

Alternativ hierzu kann es für einige Anwendungen auch genügen, die Position eines softwareseitig - z.B. durch elektronische Bildbearbeitung - in das Anzeigebild ergänzten Fadenkreuzes entsprechend abhängig vom Ablauffehler anzupassen, sodass dieser korrigiert wird und somit dem Benutzer dennoch eine hochpräzise und vom Ablauffehler im Wesentlichen entkoppelte Anzielung zu ermöglichen.

Zusätzlich oder alternativ zu einer Ablauffehlerkorrektur können auch durch Temperaturschwankungen bedingte Fehler in der Teleskopoptik - d.h. abhängig vom Temperaturverhalten der Teleskopoptik entstehende Fehler in der Abbildung auf der Kamera - softwareseitig beim Erzeugen des Anzeigebilds aus dem erfassten Kamera-Bild durch den Grafikprozessor kompensiert werden. Dazu kann beispielsweise ein Temperatursensor in der Visiereinrichtung vorgesehen sein, sodass die beschriebenen Temperatureffekte herauskalibriert werden können.

In einer weiteren Ausführungsform der Erfindung weist die Visiereinrichtungsoptik eine stark verzeichnende optische Komponente auf, die den Abbildungsmassstab vom Zentralbereich des Sichtfelds hin zu Randbereichen verändert. Beispielsweise kann eine derartige optische, insbesondere fischaugenartig wirkende Komponente verwendet werden, dass eine zusätzliche Vergrösserung in einem Zentralbereich des Blickfelds und hingegen eine Verkleinerung in den Randbereichen des Blickfelds erzeugt werden. Dadurch kann einerseits ein großes Blickfeld gewährleistet und andererseits dennoch eine gar erhöhte Auflösung im Zentralbereich erlaubt werden. Diese gezielt erzeugte starke Verzeichnung kann gemäß der Erfindung softwareseitig kompensiert werden, sodass wieder ein entzerrtes Anzeigebild erzeugt wird. Die verzeichnende Optik hat dabei den Vorteil, dass der interessierende Zentralbereich des Blickfelds mit einer erhöhten Auflösung durch den Kamerasensor erfassbar ist und somit auch bei einer digital erheblich vergrösserten Darstellung eines Zentralbereichs des erfassten Kamera-Bilds als Anzeigebild eine hohe Bildqualität ermöglicht werden kann. Für die direkte visuelle Betrachtung durch einen Direktsichtkanal - gemäss dem Stand der Technik - ist eine solche stark verzeichnende Optik hingegen ungeeignet.

Da die Fernrohroptik bei Vermessungsgeräten des Standes der Technik im Allgemeinen über ein Sichtfeld von ca. 1.5° verfügt, kann sich der Auffindvorgang des Zielobjekts als langwierig erweisen. Um insbesondere zu Beginn des Auffindvorgangs ein größeres Sichtfeld - von z.B. 15° - zu gewährleisten, kann erfindungsgemäss ein spezielles zusätzliches optisches Element (z.B. eine Weitwinkeloptik) vorgesehen sein, das optional in den ersten optischen Pfad ein- und ausgeschwenkt werden kann. Teilweise kann dieser Effekt auch durch die - bereits erwähnte - stark verzeichnende, fischaugenartige Optik erzeugt werden. Zusätzlich oder alternativ könnte zudem eine weitere separate, beispielsweise parallel zur optischen Achse der Visiereinrichtungsoptik ausgerichtete Überblick-Kamera, die am Visiereinrichtungsgehäuse angeordnet ist, verwendet werden. Das durch diese Kamera erfasste Weitwinkel-Bild mit grossem Sichtfeld kann z.B. zu Beginn eines Auffindvorgangs als Anzeigebild auf dem Mikrodisplay darstellt werden. Nach Auffinden des Zielobjekts kann der Betrachter zur Anzielung auf das Bild des integrierten, koaxialen Kamerasensors wechseln. Auf diese Weise kann - bei durchgehender Betrachtung desselben Mikrodisplays durch das Okular-sowohl ein Zielobjekt einfach aufgefunden als auch präzise anvisiert werden.

Der in der Visiereinrichtungsoptik integrierte Kamerasensor enthält dabei eine Vielzahl von Bilderfassungspunkten. Rein beispielhaft kann etwa ein Kamerasensor mit fünf Millionen Bilderfassungspunkten, die jeweils eine Pixelgrösse von z.B. ca. 2 µm x 2 µm aufweisen können, verwendet werden. Der Kamerasensor kann als CCD- oder CMOS-Flächensensor ausgeführt sein, wobei die Diagonale der Erfassungsfläche beispielsweise zwischen 5 und 10 mm betragen kann. Insbesondere ist der Kamerasensor in einer Zwischenbildebene positioniert, in welcher bei Direktsichtkanal-Zielfernrohren des Standes der Technik im Allgemeinen die Strichplatte angeordnet ist.

Beispielsweise kann der Kamerasensor derart ausgebildet und in der Visiereinrichtung angeordnet sein, dass standardmässig ein Kamera-Bild eines Sichtfelds von z.B. etwa 2.2° x 1.6° erfassbar ist. Bei gattungsgemässen Direktsichtkanal-Zielfernrohren des Standes der Technik ist vergleichsweise ein kreisförmiges Sichtfeld von etwa 1.5° üblich.

Des Weiteren kann das erfindungsgemässe Vermessungsgerät - in einer speziellen Ausführungsform - eine bereits aus dem Stand der Technik bekannte automatische Feinanziel-Funktion (ATR: "Automatic Target Recognition") aufweisen. Dafür wird eine Feinanziel-Lichtquelle vorgesehen, deren emittierte Strahlen in den ersten optischen Pfad eingekoppelt und durch das Objektiv in Richtung des grob anvisierten Zielobjekts ausgesendet werden. Die am Zielobjekt reflektierten Feinanziel-Strahlen können über das Objektiv empfangen und - beispielsweise anhand eines wellenlängenabhängigen Strahlauskoppelelements oder Filters - auf einen Feinanziel-Detektor gelenkt werden.

Erfindungsgemäss kann jedoch auch der ohnehin vorhandene Kamerasensor die Funktion des Feinanziel-Detektors übernehmen, sodass die reflektierten Feinanziel-Strahlen durch den Kamera-Sensor als Feinanziel-Bild erfasst und hinsichtlich einer Fein-Ausrichtung der Visiereinrichtung ausgewertet werden. Zur Filterung der empfangenen, am Zielobjekt reflektierten Feinanziel-Strahlen aus dem durch das Objektiv einfallenden Umgebungslicht kann dem Kamerasensor ein während der automatischen Feinanzielung einschwenkendes, schmalbandiges Filterelement vorgeordnet sein, sodass als Feinanziel-Bild im Wesentlichen nur die am Zielobjekt reflektierten Feinanziel-Strahlen erfasst werden.

Im Üblichen weisen Kamerasensoren einen gewissen Wellenlängenbereich - z.B. um etwa 850 nm - auf, in dem die für die unterschiedlichen Farben vorgesehenen Bilderfassungspunkte im Wesentlichen dieselbe Sensitivität aufweisen. Dieser Wellenlängenbereich eignet sich besonders gut für die Feinanziel-Funktion, d.h. dass vorzugsweise die Feinanziel-Lichtquelle Feinanziel-Strahlen in diesem Wellenlängenbereich - z.B. um etwa 850 nm - emittiert. Alternativ kann auch ein Kamerasensor verwendet werden, der einen zusätzlichen Pixeltyp aufweist, welcher speziell für die Wellenlänge der Feinanzlel-Strahlen (z.B. im Infrarotbereich) ausgelegt ist.

Die elektronische graphische Anzeigekomponente ist - wie bereits beschrieben - insbesondere als Mikrodisplay ausgeführt. Das Mikrodisplay kann dabei z.B. eine Anzeigediagonale von etwa zwischen 5 und 25 mm aufweisen. Entsprechende Mikrodisplays bzw. Minidisplays, wie z.B.
- eine Organische-Leuchtdioden-Anzeige (OLED-Display),
- eine Dünnschichttransistoren-Flüssigkristallanzeige (TFT-LCD "Thin-Film-Transistor Liquid-Crystal-Display") oder
- eine Liquid-Crystal-on-Silicon-Anzeige (LCOS-Display),
sind aus dem Stand der Technik bekannt.

Da übliche Mikrodisplays im Allgemeinen eine geringere Auflösung aufweisen als gängige Kamerasensoren, kann das mit hoher Auflösung erfasste Kamerabild komprimiert werden, d.h. dass bei der Generierung des Anzeigebilds eine Datenreduktion erfolgt. Beispielsweise haben gängige Mikrodisplays eine Auflösung von beispielsweise 640 x 480 oder 800 x 600 Bildpunkte und gängige Kamerasensoren z.B. eine Auflösung von 2500 x 1900 Bilderfassungspunkten. Bei einer gesamten Darstellung des erfassten Kamerabilds im Anzeigebild kann somit vorteilhaft ein Zusammenfassen der Kamerapixel von z.B. 3 x 3 Pixel erfolgen, sodass dadurch eine erhebliche Datenreduktion und somit eine hinsichtlich der Reaktionsgeschwindigkeit verbesserte Live-Bilddarstellung im Mikrodisplay erzielt werden kann. Bei einem digitalen Zoomen im Anzeigebild kann entsprechend obigem Beispiel bis zu einem Faktor des elektronischen Zooms von 3 ohne Verlust in der Bildqualität, d.h. ohne erforderliche Interpolation, eine 1 zu 1 Darstellung der Kamera- zu Displaypixel erfolgen.

Wie bereits oben angedeutet kann der Grafikprozessor bei der Generierung des Anzeigebilds aus dem Kamera-Bild, neben der erfindungsgemäßen Kompensation einer Verzeichnung des Kamera-Bilds, unter anderem folgende elektronische Verarbeitungsschritte - insbesondere im Wesentlichen in Echtzeit - durchführen:
- eine elektronische Einblendung eines Strichmusters und/oder eines Fadenkreuzes,
- eine elektronische Einblendung von Mess-Informationen,
- eine Kompensation eines Helligkeitsabfalls in Randbereichen des Kamera-Bilds, und/oder
- eine Kompensation eines durch Beschichtung einer im ersten optischen Pfad befindlichen Optik erzeugten Farbstichs des Kamera-Bilds, insbesondere einen Weissabgleich.

Der Grafikprozessor kann dabei - auf an sich bekannte Art und Weise - z.B. als FPGA (Field Programmable Gate Array), PLD (Programmable Logic Device) oder ASIC (Anwendungsspezifische Integrierte Schaltung) ausgebildet sein. Alternativ kann die Grafikverarbeitung jedoch auch durch eine zentrale Recheneinheit des geodätischen Geräts - die somit auch als Grafikprozessor fungiert - erfolgen, wobei zusätzlich verschiedene weitere elektronische Verarbeitungsschritte durch die zentrale Recheneinheit durchgeführt werden.

In einer weiteren speziellen Ausführungsform kann das erfasste Kamera-Bild zusätzlich als Fokussierhilfe für einen Autofokus oder für eine manuelle Fokussierung verwendet werden.

Wie teilweise bereits obig erwähnt können erfindungsgemäss im Anzeige-Bild des Mikrodisplays zudem z.B. die folgenden Anwendungen/Funktionen bereitgestellt werden:
- Darstellung von gemessenen Zielpunkten (Messdaten), wobei die Messdaten entsprechend mit dem Live-Anzeige-Bild überlagert werden können, sodass der Benutzer darüber informiert ist, welche Zielpunkte bereits gemessen worden sind und dies etwa als Entscheidungsgrundlage für weitere Messungen dienen kann.
- Darstellung von gespeicherten Designdaten wie etwa ein CAD-Model von einem zu erstellenden Gebäude, wobei die Designdaten entsprechend mit dem Live-Anzeige-Bild überlagert sowie z.B. wahlweise ein- und ausgeblendet werden können. Erfindungsgemäss kann sich somit der Benutzer jederzeit einen Überblick über die Designdaten verschaffen, ohne dabei das Auge vom Teleskop zu entfernen. Insbesondere kann dabei die Darstellung (z.B. die verwendete Farbe) der Designdaten geändert werden, sobald die Designdaten im Rahmen einer Absteckung ins Feld übertragen worden sind, sodass der Absteckungsfortschritt für den Benutzer verbessert ersichtlich ist der Benutzer Kenntnis hat, welche Punke bereits abgesteckt worden sind und welche nicht.
- Darstellung von Mess-/Designdaten in Abhängigkeit von der aktuellen Position und Ausrichtung der Kamera sowie insbesondere auch in Abhängigkeit von der aktuellen Zoomstufe, sodass die Mess-/Designdaten entsprechend dem jeweils aktuell dargestellten Sichtfeld angepasst werden.
- Distanzabhängige Darstellung von Objekten (insbesondere Messpunkten), sodass nahe Objekte grösser dargestellt werden als weiter entfernte Objekte und dadurch dem Benutzer eine optische Distanzabschätzung des eingespielten Objekts ermöglicht wird.
- Anzeige von Distanz- und Winkelangaben der aktuellen Position des Zielpunkts (z.B. des Prismas) relativ zur Soll-Position. Die so genannten Absteckelemente können im Display angezeigt werden. Beispielsweise kann eine Darstellung von Pfeilen bei einem Absteckvorgang zur Anzeige der Richtung des Zielpunktes (Prismas) bezüglich der abzusteckenden Soll-Position erfolgen. Alternativ kann auch eine gleichzeitige Darstellung des Fadenkreuzes und der Soll-Position des Fadenkreuzes bei der Absteckung erfolgen, sodass der Benutzer lediglich das Fadenkreuz und die angezeigte Soll-Position durch Drehung der Alhidade zur Übereinstimmung bringen muss. Dies ermöglicht dem Benutzer den kompletten Absteckvorgang von Designdaten direkt durch Betrachten des Mikrodisplays in der Visiereinrichtung durchführen. Ein Absetzen des Auges vom Okular und ein damit erforderliches Umfokussieren (was zur Ermüdung des Auges führen kann), kann somit vermieden werden. Gemäss dem Stand der Technik ist hingegen das Anzielen durch das Fernrohr erforderlich und anschliessend sind die Absteckinformationen jeweils auf dem separaten Display abzulesen, was ein ständiges Wechseln zwischen einem Blick durch das Zielteleskop und einem Betrachten des separaten Displays erforderlich macht.
- Digitales Zoomen im Live-Anzeige-Bild des Mikrodisplays, sodass dem Benutzer eine grössere Darstellung eines Objektes und somit eine vereinfachte und genauere Anzielung bereitgestellt werden kann.
- Einblendung von zusätzlichen Informationen im Live-Anzeige-Bild des Mikrodisplays, die für den Messprozess erforderlich sind, wie alphanumerische Informationen (z.B. Messelemente wie Distanzen oder Richtungen, Punktinformationen, Codes, Prismentypen, etc.) oder graphische Informat ionen (z.B. Libelle, Batteriestatus, Prismentypen, etc.).
- Anzeige von unterschiedlichen Arten von Fadenkreuzen, wobei neben der Farbe des Fadenkreuzes z.B. auch die Form des Fadenkreuzes benutzerseitig auswählbar sein kann. Je nach Anwendung kann somit das dafür optimale Fadenkreuz ausgewählt werden.
- Änderung/Manipulation von Bildhelligkeit und -kontrast des Live-Anzeige-Bilds des Mikrodisplays, wodurch z.B. beim Arbeiten im Gegenlicht der Zielpunkt verbessert sichtbar gemacht werden kann und somit ein ermüdungsfreies Arbeiten ermöglicht wird. Beispielsweise kann bei Sonnenschein die Helligkeit und/oder auch die Belichtungszeit der Kamera entsprechend geändert werden.
- Kompensation/Korrektur von Bildfehlern (Verzeichnungen oder Farbfehler) im Live-Anzeige-Bild des Mikrodisplays, sodass optimale Bildeigenschaften und eine präzise Anzielbarkeit für den Benutzer bereitgestellt werden können.
- Durchführung diverser Bildverarbeitungen (z.B. Kantenbild schärfen bzw. Kantenbild extrahieren). Somit können dem Benutzer durch eine erste Bildverarbeitung gefilterte und für den Arbeitsprozess relevante Daten zur Verfügung gestellt werden.

Das erfindungsgemässe Verfahren und die erfindungsgemässe Vorrichtung werden nachfolgend anhand von in den Zeichnungen schematisch dargesellten konkreten Ausführungsbeispielen rein beispielhaft näher beschrieben, wobei auch auf weitere Vorteile der Erfindung eingegangen wird. Im Einzelnen zeigen:
- Fig.1: ein als Totalstation ausgebildetes erfindungsgemässes geodätisches Vermessungsgerät;
- Fig.2: eine erste Ausführungsform für eine erfindungsgemässe Visiereinrichtungsoptik mit einem dem Okular vorgeordneten Mikrodisplay;
- Fig.3: eine zweite Ausführungsform für eine erfindungsgemässe Visiereinrichtungsoptik mit einem dem Okular vorgeordneten Mikrodisplay;
- Fig.4: eine dritte Ausführungsform für eine erfindungsgemässe Visiereinrichtungsoptik mit einem dem Okular vorgeordneten Mikrodisplay;
- Fig.5: ein erfasstes Kamerabild und das daraus anhand des Grafikprozessors generierte Anzeigebild des Mikrodisplays;
- Fig.6: ein erfindungsgemässes Vermessungsgerät mit weiter Pupillenöffnung des Okulars im Vergleich zu einem Vermessungsgerät des Standes der Technik mit Direktsichtkanal und geringer Pupillenöffnung des Okulars;
- Fig.7: eine vierte Ausführungsform für eine erfindungsgemässe Visiereinrichtungsoptik mit einem dem Okular vorgeordneten Mikrodisplay; und
- Fig.8: eine fünfte Ausführungsform für eine erfindungsgemässe Visiereinrichtungsoptik mit einem dem Okular vorgeordneten Mikrodisplay;

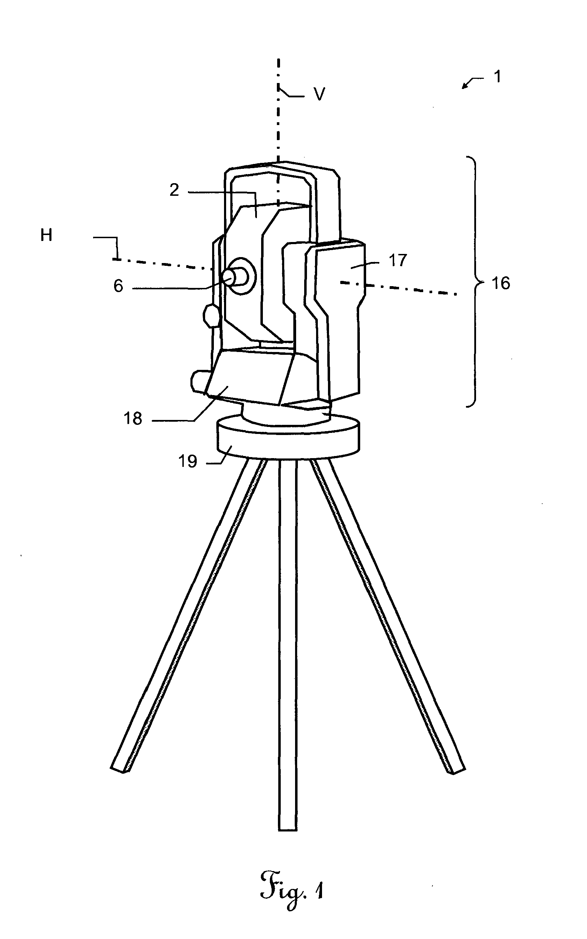

Figur 1 zeigt ein erfindungsgemässes, als Totalstation ausgebildetes geodätisches Vermessungsgerät 1 zur Messung von Horizontalwinkeln, Vertikalwinkeln und Distanzen zu einem beabstandeten Zielobjekt.

Die Totalstation ist auf einem Stativ angeordnet, wobei eine Basis 19 der Totalstation direkt und fest mit dem Stativ verbunden ist. Der Hauptkörper der Totalstation, der auch als Oberteil 16 bezeichnet wird, ist relativ zur Basis 19 um eine vertikale Stehachse V drehbar.

Das Oberteil 16 weist dabei eine - z.B. durch zwei Säulen gebildete - Stütze 17, eine zwischen den Säulen um die horizontale Kippachse H drehbar gelagerte Visiereinrichtung 2 sowie eine elektronische Anzeige-Steuereinheit 18 auf. Die Anzeige-Steuereinheit 18 kann in bekannter Weise zur Steuerung des Vermessungsgeräts 1 sowie zur Verarbeitung, Anzeige und Speicherung von Messdaten ausgebildet sein.

Die Visiereinrichtung 2 ist an der Stütze 17 um eine horizontale Kippachse H drehbar angeordnet und kann somit zur Ausrichtung auf ein Zielobjekt relativ zur Basis 19 horizontal und vertikal geschwenkt bzw. gekippt werden. Dabei ist die Visiereinrichtung als eine gemeinsame Visiereinrichtungs-Baueinheit ausgeführt, wobei zumindest ein Objektiv, eine Fokussieroptik, ein koaxialer Kamerasensor, die erfindungsgemässe Mini-Anzeigekomponente, das Okular 6 sowie insbesondere ein Grafikprozessor in einem gemeinsamen Visiereinrichtungs-Gehäuse integriert sind.

Mittels der Visiereinrichtung 2 kann das Zielobjekt angezielt und die Entfernung von der Totalstation zu dem Zielobjekt elektrosensorisch erfasst werden. Weiters sind Mittel zum elektrosensorischen Erfassen der Winkelausrichtung des Oberteils 16 relativ zur Basis 19 und der Visiereinrichtung 2 relativ zur Stütze 17 vorgesehen. Diese elektrosensorisch erfassten Messdaten werden der Anzeige-Steuereinheit 18 zugeführt und von dieser verarbeitet, so dass die Position des Zielpunkts relativ zur Totalstation durch die Anzeige-Steuereinheit 18 ermittelbar, optisch anzeigbar und speicherbar ist.

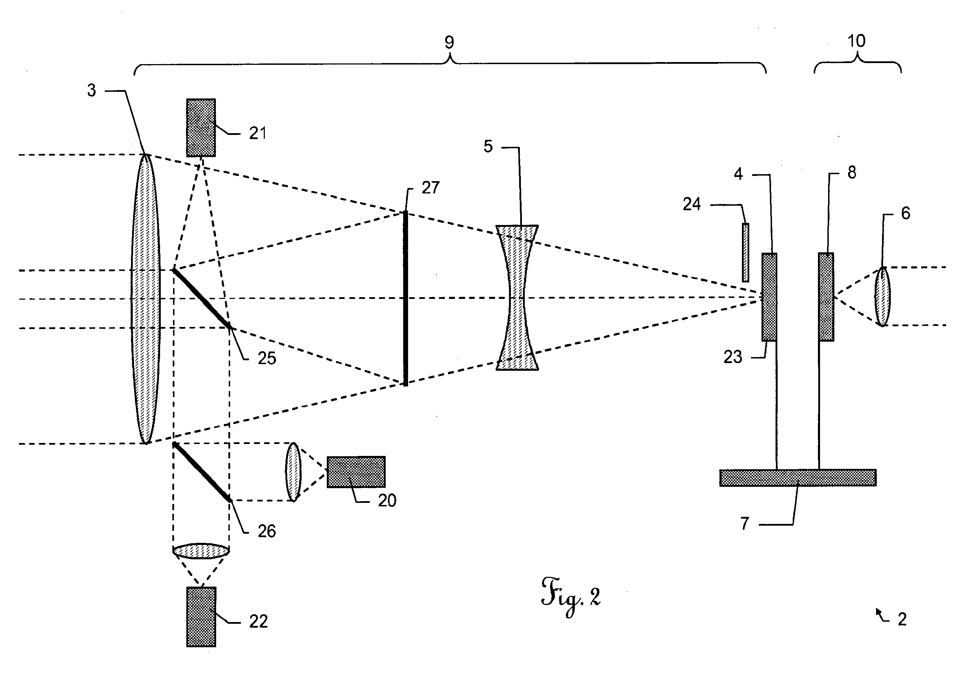

Figur 2 zeigt eine erste, refraktive Ausführungsform für eine erfindungsgemässe Visiereinrichtungsoptik mit einem Mikro- bzw. Minidisplay als Anzeigekomponente 8.

Die Visiereinrichtungsoptik weist das Objektiv 3, die Fokussieroptik 5, einen - koaxial zur optischen Achse der Visiereinrichtung 2 ausgerichteten - Kamerasensor 4 zur Erfassung eines Kamera-Bildes, das Mikrodisplay als Anzeigekomponente 8 sowie ein Okular 6 auf.

Der Kamerasensor 4 ist dabei mit einem elektronischen Grafikprozessor 7 zur Generierung eines Anzeigebilds aus dem erfassten Kamera-Bild verbunden. Grafikprozessor 7 ist wiederum mit dem Mikrodisplay verbunden, sodass das generierte Anzeigebild anhand des Mikrodisplays dargestellt und von einem Benutzer durch das Okular 6 betrachtet werden kann.

Zwischen dem Objektiv 3 und dem Kamerasensor 4 ist dabei ein erster optischer Pfad 9 und zwischen der Anzeigekomponente 8 und dem Okular 6 ein - vom ersten optischen Pfad 9 durch das Anzeigebild getrennter - zweiter optischer Pfad 10 definiert. Zur Trennung der optischen Pfade - d.h. sodass eine Direktsicht blockiert wird - ist in der Visiereinrichtung eine für optische Strahlen im sichtbaren Bereich undurchlässige Abgrenzung zwischen dem ersten und dem zweiten optischen Pfad 9,10 derart vorgesehen, dass durch das Objektiv 3 einfallende optische Strahlen am Eintritt in das Okular 6 gehindert werden. Die Abgrenzung wird hier durch den Kamerasensor 4 bzw. das Mikrodisplay bewirkt.

Das Objektiv 3 kann z.B. auch mehrlinsig aufgebaut oder panfokal - mit veränderlichem Sichtfeld - ausgeführt sein.

Für die Distanzmessung und die automatische Zielsuchfunktion sind eine EDM-Laserquelle 20 bzw. eine Feinanziel-Lichtquelle 22 vorgesehen, wobei die EDM-Laserstrahlen bzw. die Feinanziel-Strahlen anhand eines ersten und zweiten Strahlkombinierers 25,26 - wie beispielsweise Strahlteilerflächen mit dichroitischer Beschichtung - entsprechend ein- und ausgekoppelt werden. Die EDM-Laserquelle 20 kann z.B. EDM-Laserstrahlen im visuellen Bereich - etwa mit einer Wellenlänge von 630 nm - emittieren, sodass ein Messfleck am Zielobjekt sichtbar ist.

Zwischen dem ersten Strahlkombinierer 25 und der Fokussieroptik 5 kann dabei Strahlauskoppler 27 vorhanden sein, der die EDM-Laserstrahlen auskoppelt, hingegen das visuelle Spektrum vorteilhaft möglichst ungehindert transmittiert. Die ausgekoppelten EDM-Laserstrahlen werden durch den Strahlkombinierer 25 auf einen EDM-Empfänger 21 gelenkt.

In der gezeigten Ausführungsform dient der Kamerasensor 4 zusätzlich als Feinanziel-Detektor 23 (ATR-Empfänger) zur Erfassung von reflektierten Feinanziel-Strahlen.

Das in seiner Stellung veränderliche Fokussierelement 5 kann alternativ auch mehrlinsig ausgebildet sein. Vorteilhaft weist das Fokussierelement 5 eine stabile, präzise reproduzierbare Position für Objekte im Unendlichen auf, sodass eine möglichst gute erzielbare Genauigkeit bei der automatischen Feinanzielung gewährleistet werden kann.

Dem Kamerasensor vorgeordnet kann ein einschwenkbarer, schmalbandiger Filter 24 für die automatische Feinanziel-Messung vorgesehen sein, der das Umgebungslicht blockiert und für die Wellenlänge der Feinanziel-Strahlen transmittiv ausgebildet ist.

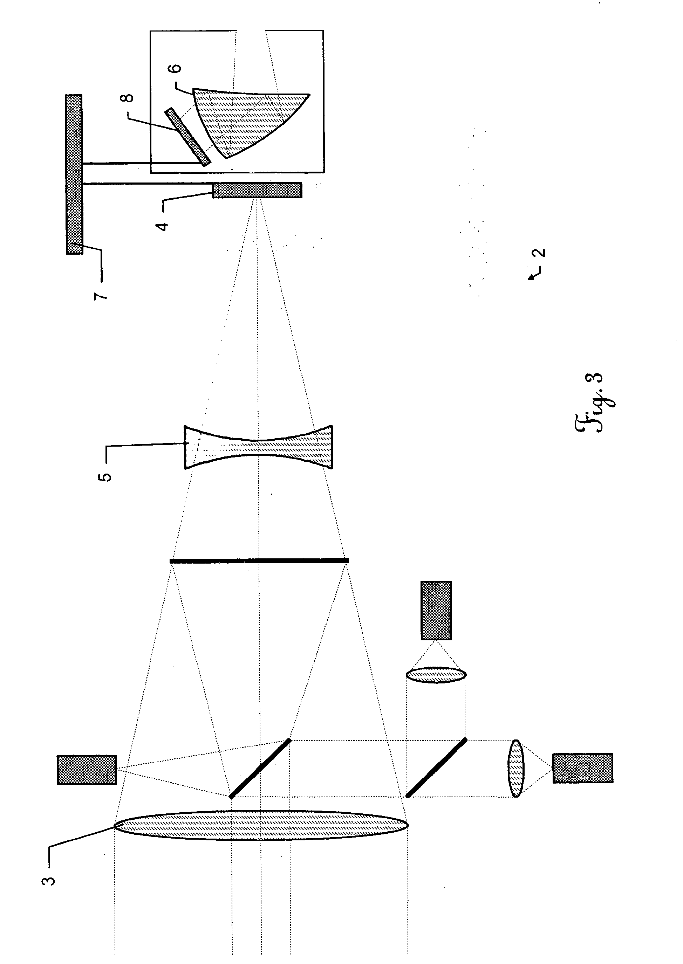

Figur 3 zeigt eine zweite Ausführungsform für eine erfindungsgemässe Visiereinrichtungsoptik mit einem ähnlichen Aufbau wie in Figur 2.

So weist auch die hier schematisch dargestellte Visiereinrichtung 2 ein Objektiv 3, eine Fokussieroptik 5, einen - koaxial zur optischen Achse der Visiereinrichtung 2 ausgerichteten - Kamerasensor 4 sowie eine - als OLED-Mikrodisplay mit einer Auflösung von z.B. 800 x 600 Anzeigepunkte ausgebildete - Mini-Anzeigekomponente 8 mit Okular 6 auf.

In diesem Fall ist allerdings das Mikrodisplay zusammen mit dem Okular 6 als eine integrierte Baueinheit ausgeführt, wobei die Flächennormale des Display-Bildschirms schräg zur optischen Achse des Okulars 6 bzw. des Objektivs 3 ausgerichtet ist.

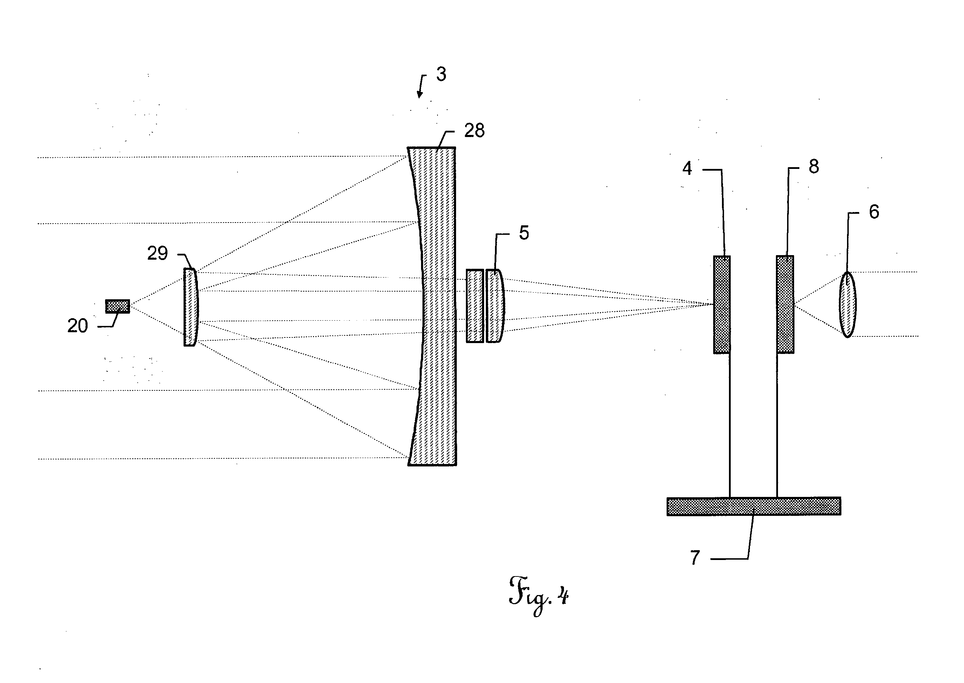

Figur 4 zeigt eine dritte Ausführungsform für eine erfindungsgemässe Visiereinrichtungsoptik. In diesem Fall ist die Visiereinrichtung als katadioptrisches System mit Spiegeloptik ausgeführt. Ein erster, konkaver Spiegel 28 dient dabei als Objektiv 3.

Ein zweiter, kleinerer Spiegel 29 ist für EDM-Laserstrahlen durchlässig ausgebildet, sodass die anhand der EDM-Laserquelle 20 ausgesendeten EDM-Laserstrahlen für die Distanzmessung durch den zweiten Spiegel 29 transmittiert werden.

Anhand der mehrlinsigen Fokussieroptik 5 wird ein Bild des Sichtfeldbereichs auf den Kamerasensor 4 fokussiert und als Kamera-Bild erfasst. Aus dem erfassten Kamera-Bild kann wiederum durch einen elektronischen Grafikprozessor 7 ein Anzeigebild generiert werden, das anhand der Mini-Anzeigekomponente 8 dargestellt und von einem Benutzer durch das Okular 6 betrachtet werden kann.

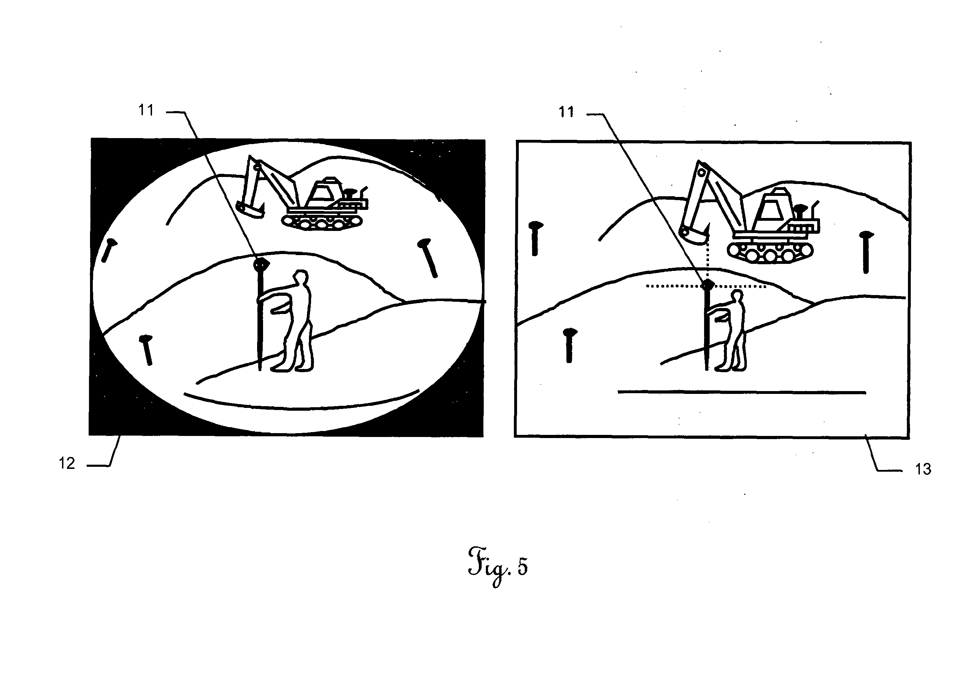

Figur 5 zeigt ein erfasstes Kamera-Bild 12 und das daraus anhand des Grafikprozessors generierte Anzeigebild 13 zur graphischen Darstellung auf dem Mikrodisplay.

Wie anhand des Kamera-Bilds 12 erkennbar ist, weist die Visiereinrichtungsoptik eine stark verzeichnende optische Komponente auf, sodass sich der Abbildungsmassstab vom Zentralbereich des Blickfelds hin zu Randbereichen verändert. Insbesondere kann eine derartige optische, fischaugenartig wirkende Komponente verwendet werden, dass eine zusätzliche Vergrösserung in einem Zentralbereich des Blickfelds und hingegen eine Verkleinerung in den Randbereichen des Blickfelds erzeugt werden.

Durch die verzeichnende Optik kann somit der für die exakte Anzielung des Zielobjekts 11 verwendete Zentralbereich des Sichtfelds mit erhöhter Auflösung gegenüber den Randbereichen des Sichtfelds durch den Kamerasensor erfasst werden. Zusammengefasst kann also einerseits sowohl ein - gegenüber einer Lösung ohne verzeichnende Optik - weiteres Blickfeld gewährleistet und andererseits dennoch eine - gegenüber der Lösung ohne verzeichnende Optik - gar erhöhte Auflösung im Zentralbereich erlaubt werden.

Die gezielt erzeugte, bekannte Verzeichnung des Kamera-Bildes 12 kann bei der Generierung des Anzeigebilds anhand elektronischer Bildverarbeitung kompensiert werden, sodass ein wiederum entzerrtes Anzeigebild 13 erzeugt wird.

Durch die im interessierenden Zentralbereich des Blickfelds gewährleistete erhöhte Auflösung kann nun auch bei einer digital erheblich vergrösserten Darstellung des Zentralbereichs das erfasste Kamera-Bild 12 insbesondere ohne Qualitätseinbusse als Anzeigebild 13 im Mikrodisplay bereitgestellt werden.

Als weiterer elektronischer Bildverarbeitungsschritt wird bei der Generierung des Anzeigebilds 13 aus dem Kamera-Bild 12 ein Fadenkreuz an jener Stelle des Anzeigebilds 13 eingefügt, sodass der Mittelpunkt des Fadenkreuzes hochpräzise die aktuelle Ausrichtung der optischen Achse der Visiereinrichtung indiziert.

Wie bereits erläutert kann optional eine Digitalzoom-Funktion bereitgestellt werden, sodass jeweils nur ein variabler Teilbereich des Kamera-Bilds entsprechend vergrössert als Anzeigebild dargestellt wird.

Des Weiteren kann das Kamerabild softwareseitig nicht nur mit einem Fadenkreuz, sondern zusätzlich mit andersartigen Informationen überlagert werden. Beispielsweise kann eine elektronische Hinzufügung von Messdaten - insbesondere Winkel-/Distanzwerte, GIS-Daten, Designdaten und/oder Markierungen für bereits vermessene Punkte - erfolgen, sodass diese ebenfalls dem im Mikrodisplay dargestellten Anzeigebild entnommen werden können.

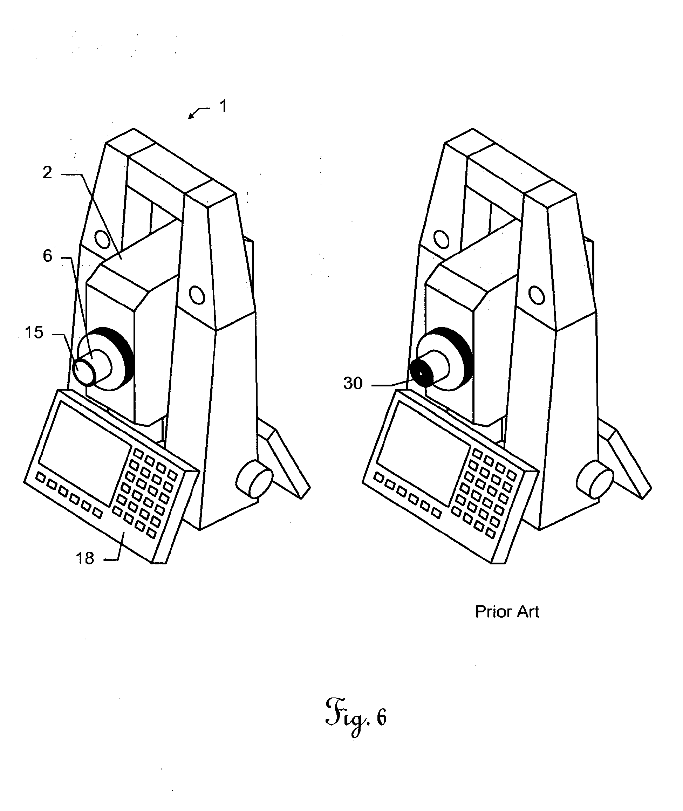

Figur 6 zeigt ein erfindungsgemässes geodätisches Vermessungsgerät 1 mit weiter Austrittspupille 15 des Okulars 6 im Vergleich zu einem Vermessungsgerät des Standes der Technik mit Direktsichtkanal und sehr geringer Pupillenöffnung 30.

Durch das vorgängig beschriebene elektronische Hinzufügen eines Fadenkreuzes beim Generieren des Anzeigebilds im Grafikprozessor ergibt sich erfindungsgemäss der Vorteil gegenüber Zielfernrohren mit Direktsichtkanal, dass ein Okular 6 mit einem verhältnismässig grossem Pupillenöffnungsdurchmesser verwendet werden kann. Hingegen ist bei einem visuellen Direktsichtkanal mit einer in einer Zwischenbildebene angeordneten Strichplatte die Öffnung der Pupille 30 des Okulars sehr klein zu wählen, um einen Parallaxenfehler zwischen Strichplatte und Zwischenbild bei schrägem Blick in das Okular gering zu halten. Dieses Problem ist bedingt durch die Überlagerung einer virtuellen Bildebene, nämlich der Zwischenbildebene, mit einer realen Bildebene, nämlich der Strichplatte.

Im Gegensatz dazu lässt die Erfindung ohne Gefährdung eines solchen Parallaxenfehlers die Verwendung eines Okulars 6 mit einer verhältnismässig grossen Pupillenöffnung 15 zu, da ein Bild des Sichtfeldbereichs zusammen mit dem Fadenkreuz gemeinsam in einer Ebene - nämlich insbesondere der Ebene des Bildschirms des Mikrodisplays - erzeugt wird. Benutzerseitig ergibt sich somit der Vorteil, dass keine störend wirkende kleine Austrittspupille im Okular notwendig ist und das Anvisieren des Zielobjekts anhand der Visiereinrichtung 2 mit höherem Komfort und entspannter erfolgen kann. Zudem ist das Betrachten des Anzeigebilds durch das Okular aufgrund der gewährleisteten weiten Pupillenöffnung auch für brillentragende Benutzer verbessert geeignet.

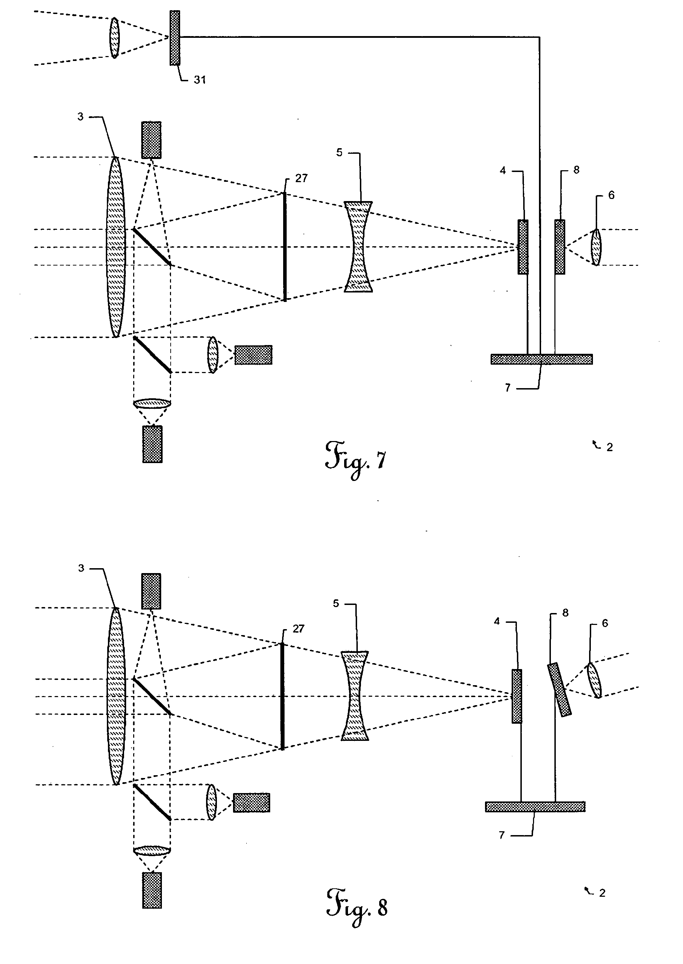

Figur 7 zeigt eine vierte Ausführungsform für eine erfindungsgemässe Visiereinrichtung. In diesem Fall ist zusätzlich zum dem vielfach vergrössernd wirkenden Objektiv 3 nachgeordneten Kamerasensor 4 eine weitere separate, beispielsweise parallel zur optischen Achse der Visiereinrichtungsoptik ausgerichtete Überblick-Kamera 31 vorgesehen, die am Visiereinrichtungsgehäuse angeordnet sein kann. Die Überblick-Kamera 31 ist dabei zur Erfassung eines Weitwinkel-Bildes in einem - verglichen mit dem Sichtfeld des Kamerasensors 4 - grossen Weitwinkel-Sichtfeld ausgebildet. Das durch diese Überblick-Kamera 31 erfasste Weitwinkel-Bild mit grossem Sichtfeld kann z.B. zu Beginn eines Auffindvorgangs als Anzeigebild auf dem Mikrodisplay 8 darstellt werden. Nach Auffinden des Zielobjekts kann der Betrachter zur Anzielung auf das Bild des dem vielfach vergrössernd wirkenden Objektiv 3 nachgeordneten Kamerasensors 4 wechseln. Auf diese Weise kann - bei durchgehender Betrachtung desselben Mikrodisplays durch das Okular - sowohl ein Zielobjekt einfach aufgefunden als auch präzise anvisiert werden.

Figur 8 zeigt eine fünfte Ausführungsform für eine erfindungsgemässe Visiereinrichtung. In diesem Ausführungsbeispiel sind das Mikrodisplay und das Okular derart angeordnet, dass die optischen Achsen des Mikrodisplays 8, des Objektivs 3 und des Okulars 6 nicht koaxial ausgerichtet sind. Beispielsweise kann die in Figur 8 dargestellte Anordnung, wobei Mikrodisplay 8 und Okular 6 - im Verhältnis zur optischen Achse des Objektive 3 - leicht nach schräg oben ausgerichtet sind, einem grossgewachsenen Benutzer das Betrachten des Anzeigebilds durch das Okular ergonomisch angenehmer gestalten und somit erleichtern. Allerdings könnte sich diese Anordnungsweise gemäss Figur 8 eventuell negativ auf die Intuitivität beim Anzielen eines Zielobjekts auswirken.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

Unter dem Begriff "geodätisches Vermessungsgerät" soll im Rahmen der vorliegenden Erfindung verallgemeinernd stets ein Messinstrument verstanden werden, das über Vorrichtungen zur Messung oder Überprüfung von Daten mit räumlichem Bezug verfügt. Insbesondere betrifft dies die Messung von Entfernung und/oder Richtung bzw. Winkeln zu einem Bezugs- oder Messpunkt. Darüber hinaus können jedoch noch weitere Vorrichtungen, z.B. Komponenten zur satellitengestützten Ortsbestimmung (bspw. GPS, GLONASS oder GALILEO), vorhanden sein, die für ergänzende Messungen oder Datenaufnahmen verwendet werden können.

## Patentansprüche

1. Geodätisches Vermessungsgerät (1) ausgebildet als Theodolit oder Totalstation mit
• einer Winkel- und Entfernungsmessfunktionalität zur Bestimmung einer Position eines Zielobjekts (11),
• einer Visiereinrichtung (2) mit
∘ einem vielfach vergrössernd wirkenden Objektiv (3),
∘ einem eine Vielzahl von Bilderfassungspunkten aufweisenden Kamerasensor (4), insbesondere einem CCO- oder CMOS-Flächensensor, zur Erfassung eines Kamera-Bildes (12) eines Sichtfelds,
∘ einer dem Kamerasensor (4) vorgeordneten Fokussieroptik (5), wobei zwischen dem Objektiv (3) und dem Kamerasensor (4) ein erster optischer Pfad (9) definiert ist, sowie
∘ einem Okular (6), insbesondere wobei die optischen Achsen des Objektivs (3) und des Okulars (6) koaxial sind,
und
• einen elektronischen Grafikprozessor (7) zur Generierung eines Anzeigebilds (13) aus dem Kamera-Bild (12),
wobei die Visiereinrichtung (2) eine dem Okular (6) vorgeordnete elektronische graphische Anzeigekomponente (8) zur visuellen Darstellung des generierten Anzeigebilds (13) aufweist, und zwischen der Anzeigekomponente (8) und dem Okular (6) ein vom ersten optischen Pfad (9) durch das Anzeigebild getrennter zweiter optischer Pfad (10) definiert ist, sodass durch das Objektiv (3) einfallende optische Strahlen am Eintritt in das Okular (6) gehindert werden,
**dadurch gekennzeichnet**, dass
der Grafikprozessor (7) bei der Generierung des Anzeigebilds (13) den elektronischen Verarbeitungsschritt einer elektronischen Kompensation einer Verzeichnung des Kamera-Bilds (12) durchführt.

2. Geodätisches Vermessungsgerät nach Anspruch 1,
**dadurch gekennzeichnet,** dass
eine für optische Strahlen im sichtbaren Bereich undurchlässige Abgrenzung zwischen dem ersten und dem zweiten optischen Pfad (9,10) vorhanden ist.

3. Geodätisches Vermessungsgerät (1) nach Anspruch 1 oder 2,
**dadurch gekennzeichnet,** das
die optischen Achsen der Anzeigekomponente (8), des Objektivs (3) und des Okulars (6) koaxial ausgerichtet sind.

4. Geodätisches Vermessungsgerät (1) nach einem der vorangehenden Ansprüche,
**dadurch gekennzeichnet,** dass
der Grafikprozessor (7) bei der Generierung des Anzeigebilds (13) mindestens eine der folgenden elektronischen Verarbeitungsschritte durchführt:
• eine elektronische Einblendung eines Strichmusters und/oder eines Fadenkreuzes,
• eine elektronische Einblendung von Mess-Informationen,
• eine Kompensation eines Helligkeitsabfalls in Randbereichen des Kamera-Bilds (12),
• eine Kompensation eines durch Beschichtung einer im ersten optischen Pfad befindlichen Optik erzeugten Farbstichs des Kamera-Bilds (12), insbesondere einen Weissabgleich des Kamera-Bilds (12),
• eine Kompensation eines Ablauffehlers der Fokussieroptik (5), und/oder
• eine Kompensation von auf das Kamera-Bild (12) wirkenden Temperatureinflüssen, insbesondere wobei hierfür ein Temperatursensor in der Visiereinrichtung (2) vorgesehen ist und wobei die Kompensation durch Kalibrierung des Temperaturverhaltens der Visiereinrichtungsoptik (3) erfolgt.

5. Geodätisches Vermessungsgerät (1) nach einem der vorangehenden Ansprüche,
**dadurch gekennzeichnet,** dass
das Vermessungsgerät (1) eine automatische Feinanziel-Funktion aufweist mit einer Feinanziel-Lichtquelle (22), deren emittierte Strahlen in den ersten optischen Pfad einkoppelbar und durch das Objektiv (3) in Richtung des Zielobjekts (11) aussendbar sind, wobei am Zielobjekt (11) reflektierte Strahlen anhand des Kamerasensors (4) als Feinanziel-Detektor (23) in einem Feinanziel-Bild erfasst werden und das Feinanziel-Bild hinsichtlich einer Fein-Ausrichtung der Visiereinrichtung (2) ausgewertet wird.

6. Geodätisches Vermessungsgerät (1) nach einem der vorangehenden Ansprüche,
**gekennzeichnet durch**
ein Mikrodisplay als die Anzeigekomponente (8), wobei das Mikrodisplay eine Anzeigediagonale von etwa zwischen 5 und 25 mm aufweist und ausgebildet ist als
• Organische-Leuchtdioden-Anzeige,
• Dünnschichttransistoren-Flüssigkristallanzeige oder
• Liquid-Crystal-on-Silicon-Anzeige.

7. Geodätisches Vermessungsgerät (1) nach einem der vorangehenden Ansprüche,
**dadurch gekennzeichnet,** dass
der Grafikprozessor (7) ausgebildet ist als
• FPGA,
• PLD oder
• ASIC.

8. Geodätisches Vermessungsgerät (l) nach einem der vorangehenden Ansprüche,
**dadurch gekennzeichnet**, dass
das Okular (6) eine Austrittspupille (15) mit einem Durchmesser zwischen 5 und 20 mm aufweist.

9. Geodätisches vermessungsgerät (1) nach einem der vorangehenden Ansprüche,
**dadurch gekennzeichnet,** dass
die Visiereinrichtungsoptik (3) ausgeführt ist als
• katadioptrisches System oder
• refraktives System.

10. Geodätischen Vermessungsgerät (1) nach einem der vorangehenden Ansprüche,
**dadurch gekennzeichnet,** dass
das Objektiv (3) eine stark verzeichnende Optik aufweist, sodass ein für die Anzielung des Zielobjekts (11) ausschlaggebender Zentralbereich des Sichtfelds mit erhöhter Auflösung gegenüber den Randbetreichen des Sichtfelds erfassbar ist, wobei die dadurch bewirkte Verzeichnung des Kamera-Bildes (12) bei der durch den Grafikprozessors (7) erfolgenden Genorierung des Anzeigebilds (13) kompensiert wird.

11. Geodätisches Vermessungsgerät (1) nach einem der vorangehenden Ansprüche,
**dadurch gekennzeichnet,** dass
zumindest das Objektiv (3), die Fokussieroptik (5), der Kamerasensor (4), die Anzeigekomponente (8), das Okular (6) sowie insbesondere der Grafikprozessor (7) eine gemeinsame Visiereinrichtungs-Baueinheit, insbesondere integriert in einem gemeinsamen Visiereinrichtungs-Gehäuse, bilden.

12. Geodätisches Vermessungsgerät (1) nach einem der vorangehenden Anspruch,
**dadurch gekennzeichnet,** dass
die Visiereinrichtung (2) um eine horizontale Kippachse (H) drehbar an einer Stütze (17) angeordnet ist,
wobei zumindest
• die Visiereinrichtung (2),
• die Stütze (17) und
• eine elektronische Anzeige-Steuereinheit (18), die zur Steuerung des Vermessungsgeräts (1) sowie zur Verarbeitung, Anzeige, und Speicherung von Messdaten ausgebildet ist,
ein relativ zu einer Basis (19) um eine vertikale Stehachse (V) drehbares Oberteil (16) des Vermessungsgeräts (1) bilden.

13. Geodätisches Vermessungsgerät (1) nach einem der vorangehenden Ansprüche,
**dadurch gekennzeichnet**, dass
zusätzlich zum Kamerasensor (4) eine weitere - zur optischen Achse der Visiereinrichtungsoptik (3) ausgerichtete Überblick-Kamera 31 vorgesehen ist, die am Visiereinrichtungsgehäuse angeordnet sein kann, zur Erfassung eines Weitwinkel-Bildes eines - verglichen mit dem Sichtfeld des Kamerasensors (4) - grossen Weitwinkel-Sichtfelds.

14. Geodätisches Vermessungsgerät (1) nach einem der vorangehenden Ansprüche,
**dadurch gekennzeichnet,** dass
zur Erweiterung des Sichtfelds des Kamerasensor (4) eine optional in den ersten optischen Pfad ein- und ausschwenkbare Weitwinkeloptik vorgesehen ist.

## Claims

1. Geodetic measuring device (1) designed as a theodolite or total station, comprising
• an angle and distance measuring functionality for determining a position of a target object (11),
• a sighting device (2) comprising
□ an objective (3) having a multiply magnifying effect,
□ a camera sensor (4), more particularly a CCD or CMOS area sensor, having a multiplicity of image detection points for detecting a camera image (12) of a field of view,
□ a focusing optical system (5) disposed upstream of the camera sensor (4), wherein a first optical path (9) is defined between the objective (3) and the camera sensor (4), and
□ an eyepiece (6), more particularly wherein the optical axes of the objective (3) and of the eyepiece (6) are coaxial,
and
• an electronic graphics processor (7) for generating a display image (13) from the camera image (12),
wherein
the sighting device (2) has an electronic graphical display component (8) disposed upstream of the eyepiece (6) and serving for the visual representation of the generated display image (13), and wherein a second optical path (10) separated from the first optical path (9) by the display image is defined between the display component (8) and the eyepiece (6), in such a way that optical rays incident through the objective (3) are prevented from entering into the eyepiece (6),
**characterized** in that
the graphics processor (7), when generating the display image (13), carries out the electronic processing step of electronic compensation of a distortion of the camera image (12).

2. Geodetic measuring device according to Claim 1,
**characterized** in that
a demarcation between the first and second optical paths (9, 10) that is opaque to optical rays in the visible range is present.

3. Geodetic measuring device (1) according to Claim 1 or 2,
**characterized** in that
the optical axes of the display component (8), of the objective (3) and of the eyepiece (6) are coaxially aligned.

4. Geodetic measuring device (1) according to any one of the preceding claims,
**characterized** in that
the graphics processor (7), when generating the display image (13), carries out at least one of the following electronic processing steps:
• electronic insertion of a line pattern and/or of a crosshair,
• electronic insertion of measurement information,
• compensation of a decrease in brightness in edge regions of the camera image (12),
• compensation of a color cast of the camera image (12), said color cast being produced by the coating of an optical system situated in the first optical path, more particularly a white balance of the camera image (12),
• compensation of a sequence error of the focusing optical system (5), and/or
• compensation of temperature influences acting on the camera image (12), more particularly wherein for this purpose a temperature sensor is provided in the sighting device (2) and wherein the compensation is effected by calibration of the temperature behavior of the sighting device optical system (3).

5. Geodetic measuring device (1) according to any one of the preceding claims,
**characterized** in that
the measuring device (1) has an automatic targeting function with a fine targeting light source (22), the emitted rays of which can be coupled into the first optical path and can be emitted in the direction of the target object (11) through the objective (3), wherein rays reflected at the target object (11) are detected in a fine targeting image with the aid of the camera sensor (4) as fine targeting detector (23) and the fine targeting image is evaluated with regard to a fine alignment of the sighting device (2).

6. Geodetic measuring device (1) according to any one of the preceding claims,
**characterized** by
a microdisplay as the display component (8), wherein the microdisplay has a display diagonal of approximately between 5 and 25 mm and is designed as
• an organic light-emitting diode display,
• a thin-film transistor liquid crystal display, or
• a liquid crystal on silicon display.

7. Geodetic measuring device (1) according to any one of the preceding claims,
**characterized** in that
the graphics processor (7) is designed as
• an FPGA,
• a PLD or
• an ASIC.

8. Geodetic measuring device (1) according to any one of the preceding claims,
**characterized** in that
the eyepiece (6) has an exit pupil (15) having a diameter of between 5 and 20 mm.

9. Geodetic measuring device (1) according to any one of the preceding claims,
**characterized** in that
the sighting device optical system (3) is embodied as
• a catadioptric system, or
• a refractive system.

10. Geodetic measuring device (1) according to any one of the preceding claims,
**characterized** in that
the objective (3) has a greatly distorting optical system, such that a central region of the field of view, said central region being crucial for targeting the target object (11), can be detected with increased resolution by comparison with the edge regions of the field of view, wherein the resultant distortion of the camera image (12) is compensated for during the generation of the display image (13) effected by the graphics processor (7).

11. Geodetic measuring device (1) according to any one of the preceding claims,
**characterized** in that
at least the objective (3), the focusing optical system (5), the camera sensor (4), the display component (8), the eyepiece (6) and also, in particular, the graphics processor (7) form a common sighting device structural unit, in particular integrated in a common sighting device housing.

12. Geodetic measuring device (1) according to any one of the preceding claims,
**characterized** in that
the sighting device (2) is arranged on a support (17) in a manner rotatable about a horizontal tilting axis (H),
wherein at least
• the sighting device (2),
• the support (17), and
• an electronic display control unit (18), which is designed for controlling the measuring device (1) and also for processing, displaying, and storing measurement data,
form an upper part (16) of the measuring device (1) said upper part being rotatable about a vertical axis (V) relative to a base (19).

13. Geodetic measuring device (1) according to any one of the preceding claims,
**characterized** in that
in addition to the camera sensor (4) a further overview camera (31) aligned with respect to the optical axis of the sighting device optical system (3) is provided, which camera can be arranged on the sighting device housing, for detecting a wide-angle image of a - compared with the field of view of the camera sensor (4) - large wide-angle field of view.

14. Geodetic measuring device (1) according to any one of the preceding claims,
**characterized** in that
a wide-angle optical system that can optionally be pivoted into and out of the first optical path is provided in order to extend the field of view of the camera sensor (4).

## Revendications

1. Appareil de mesure géodésique (1) configuré comme théodolite ou station totale avec
• une fonctionnalité de mesure d'angle et de distance pour la détermination d'une position d'un objet cible (11),
• un dispositif de ciblage (2) avec
□ un objectif qui a un effet grossissant multiple (3),
□ un capteur de caméra (4) qui présente une multitude de points de capture d'image, en particulier un capteur de surface CCD ou CMOS pour la détection d'une image de caméra (12) d'un champ visuel,
□ une optique de focalisation (5) placée en amont du capteur de caméra (4), cependant qu'un premier chemin optique (9) est défini entre l'objectif (3) et le capteur de caméra (4), ainsi
□ qu'un oculaire (6), en particulier cependant que les axes optiques de l'objectif (3) et de l'oculaire (6) sont coaxiaux
et
• un processeur graphique électronique (7) pour la génération d'une image d'affichage (13) à partir de l'image de la caméra (12),
cependant que le dispositif de ciblage (2) présente une composante d'affichage graphique électronique (8) placée en amont de l'oculaire (6) pour la représentation visuelle de l'image d'affichage générée (13) et qu'un second chemin optique (9) séparé par l'image d'affichage du premier chemin optique (9) est défini si bien que des faisceaux optiques incidents par l'objectif sont empêchés d'entrer dans l'oculaire (6),
**caractérisé en ce que**
le processeur graphique (7) effectue, lors de la génération de l'image d'affichage (13), l'étape de traitement électronique d'une compensation électronique d'une distorsion de l'image de la caméra.

2. Appareil de mesure géodésique selon la revendication 1, **caractérisé en ce qu'**il existe une délimitation imperméable pour des faisceaux optiques dans la plage visible entre le premier et le second chemin optique.

3. Appareil de mesure géodésique (1) selon la revendication 1, **caractérisé en ce que** les axes optiques de la composante d'affichage (8), de l'objectif (3) et de l'oculaire (6) sont orientés en étant coaxiaux.

4. Appareil de mesure géodésique (1) selon l'une des revendications précédentes, **caractérisé en ce que** le processeur graphique (7) effectue, lors de la génération de l'image d'affichage (13), au moins l'une des étapes de traitement électronique suivantes :
• une surimpression électronique d'un motif de barres et/ou d'un graticule,
• une surimpression électronique d'informations de mesure,
• une compensation d'une chute de luminosité dans des zones marginales de l'image de la caméra (12),
• une compensation d'une dominante de couleur de l'image de la caméra (12) produite par revêtement d'une optique qui se trouve dans le premier chemin optique, en particulier un équilibrage des blancs de l'image de la caméra (12),
• une compensation d'un défaut de déroulement de l'optique de focalisation (5) et/ou
• une compensation d'influences de température qui agissent sur l'image de la caméra (12), en particulier cependant qu'il est prévu à cet effet un capteur de température dans le dispositif de ciblage (2) et cependant que la compensation est effectuée par étalonnage du comportement thermique de l'optique du dispositif de ciblage (3).

5. Appareil de mesure géodésique (1) selon l'une des revendications précédentes, **caractérisé en ce que** l'appareil de mesure (1) présente une fonction automatique de ciblage fin avec une source de lumière de ciblage fin (22) dont les faisceaux émis peuvent être injectés dans le premier chemin optique et peuvent être émis par l'objectif (3) en direction de l'objet cible (11), cependant que des faisceaux réfléchis sur l'objet cible (11) sont détectés à l'aide du capteur de la caméra (4) en tant que détecteur de ciblage fin dans une image de ciblage fin et l'image de ciblage fin est évaluée pour ce qui est d'une orientation fine du dispositif de ciblage (2).

6. Appareil de mesure géodésique (1) selon l'une des revendications précédentes, **caractérisé par** un micro-afficheur en tant que composante d'affichage, cependant que le micro-affichage présente une diagonale d'affichage d'environ entre 5 et 25 mm et est configuré comme
• affichage de diode électroluminescente organique,
• affichage à cristaux liquides de transistor à couche mince ou
• affichage à cristaux liquides sur silicium.

7. Appareil de mesure géodésique (1) selon l'une des revendications précédentes, **caractérisé en ce que** le processeur graphique (7) est configuré en tant
• que FPGA,
• PLD ou
• ASIC.

8. Appareil de mesure géodésique (1) selon l'une des revendications précédentes, **caractérisé en ce que** l'oculaire (6) présente une pupille de sortie (15) avec un diamètre entre 5 et 20 mm.

9. Appareil de mesure géodésique (1) selon l'une des revendications précédentes, **caractérisé en ce que** l'optique du dispositif de ciblage est configurée comme
• système catadioptrique ou
• système réfractif.

10. Appareil de mesure géodésique (1) selon l'une des revendications précédentes, **caractérisé en ce que** l'objectif (3) présente une optique à forte distorsion si bien qu'une zone centrale du champ visuel qui est déterminante pour le ciblage de l'objet cible (11) peut être détectée avec une résolution plus élevée que les zones marginales du champ visuel, cependant que la distorsion de l'image de la caméra (12) qui est ainsi provoquée est compensée lors de la génération de l'image d'affichage (13) qui est effectuée par le processeur graphique (7).

11. Appareil de mesure géodésique (1) selon l'une des revendications précédentes, **caractérisé en ce qu'**au moins l'objectif (3), l'optique de focalisation (5), le capteur de la caméra (4), la composante d'affichage (8), l'oculaire (6) ainsi qu'en particulier le processeur graphique (7) forment un composant commun du dispositif de ciblage, en particulier qu'ils sont intégrés dans un boîtier commun du dispositif de ciblage.

12. Appareil de mesure géodésique (1) selon l'une des revendications précédentes, **caractérisé en ce que** le dispositif de ciblage (2) est placé autour d'un axe de basculement horizontal (H) rotatif sur un montant (17), cependant que
• le dispositif de ciblage (2),
• le montant (17) et
• une unité de commande d'affichage électronique (18) qui est configurée pour la commande de l'appareil de mesure (1) ainsi que pour le traitement, l'affichage et la mise en mémoire de données de mesure
forment une partie supérieure (16) de l'appareil de mesure (1) qui est rotative par rapport à une base (19) autour d'un axe vertical (V).

13. Appareil de mesure géodésique (1) selon l'une des revendications précédentes, **caractérisé en ce qu'**en plus du capteur de la caméra (4) il est prévu une autre caméra de vue d'ensemble (31) orientée par rapport à l'axe optique de l'optique du dispositif de ciblage (3) qui peut être placée sur le boîtier du dispositif de ciblage, pour la détection d'une image grand angle d'un grand champ visuel grand angle comparé au champ visuel du capteur de la caméra (4).

14. Appareil de mesure géodésique (1) selon l'une des revendications précédentes, **caractérisé en ce qu'**il est prévu une optique grand angle pouvant rentrer et sortir en option par pivotement dans le premier chemin optique pour élargir le champ visuel du capteur de la caméra (4).
